**Europäisches Patentamt**

**European Patent Office**

**Office européen des brevets**

(11) Veröffentlichungsnummer: **0 097 896**

**B1**

(12) # EUROPÄISCHE PATENTSCHRIFT

(45) Veröffentlichungstag der Patentschrift:
**15.10.86**

(21) Anmeldenummer: **83105986.0**

(22) Anmeldetag: **18.06.83**

(51) Int. Cl.⁴: **C 08 G 81/00,** C 10 G 33/04, B 01 D 17/04

(54) **Stickstoff enthaltende Erdöl-Emulsionsspalter und ihre Verwendung.**

(30) Priorität: **25.06.82 DE 3223692**

(43) Veröffentlichungstag der Anmeldung:
**11.01.84 Patentblatt 84/2**

(45) Bekanntmachung des Hinweises auf die Patenterteilung:
**15.10.86 Patentblatt 86/42**

(84) Benannte Vertragsstaaten:
**DE FR GB NL**

(56) Entgegenhaltungen:
**DE-A-2 227 546**
**FR-A-2 286 158**
**FR-A-2 389 669**

(73) Patentinhaber: **HOECHST AKTIENGESELLSCHAFT,
Postfach 80 03 20, D-6230 Frankfurt am Main 80
(DE)**

(72) Erfinder: **Billenstein, Siegfried, Dr.,
Samerbergweg 8, D-8261 Burgkirchen/Alz (DE)**
Erfinder: **Gohlke, Fritz Joachim, Dr.,
Hochstaufenstrasse 9, D-8261 Burgkirchen/Alz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Stickstoff enthaltende Erdöl-Emulsionsspalter. Sie betrifft ferner ein Verfahren zum Trennen von Erdöl-Emulsionen, insbesondere des Wasser-in-Öl-Typs, unter Verwendung der neuen Spalter.

Es sind bereits Stickstoff enthaltende Verbindungen als Erdöl-Emulsionsspalter empfohlen worden. So werden in den US-Patentschriften 2 552 530 und 2 552 531, in den deutschen Offenlegungsschriften 22 27 546 und 24 35 713 und in der DD-Patentschrift 150 474 Stickstoff enthaltende Demulgatoren für Erdöl-Emulsionen von Typ Wasser-in-Öl beschrieben. Dabei handelt es sich unter anderem um ethoxylierte und propoxylierte Polyethyienpolyamine, die dadurch erhalten werden, daß man Triethylenietramin, Tetraethylenpentamin, Pentaethylenhexamin und dergleichen mit Ethylenoxid und Propylenoxid umsetzt.

Stickstoffhaltige Erdöl-Emulsionsspalter werden auch in der deutschen Offenlegungsschriff 30 17 198 beschrieben. Es sind teilweise alkylierte Polyethylenpolyamine.

Nach der deutschen Offenlegungsschrift 27 19 978 wird eine Mischung aus 25 bis 75 Gew.-% von einem ethoxylierten und/oder Propoxylierten Isoalkylphenolformaldehydharz und 25 bis 75 Gew.-% von einem ethoxylierten und/oder propoxylierten Polyethylenpolyamid zum Spalten von Rohölemulsionen eingesetzt.

Unter den nicht Stickstoff enthaltenden Erdölspaltern werden in der deutschen Patentschrift 24 45 873 und in der dazu korrespondierenden US-Patentschrift 4 117 031 bestimmte veretherte Phenol-Aldehyd-Kondensationsprodukte empfohlen. Diese werden dadurch erhalten, daß man a) ein Anlagerungsprodukt, das durch Umsetzung von aliphatischen Aldehyden mit Phenol im molaren Verhältnis von 1:1 bis 3:1 bei Temperaturen von 50 bis 80°C in Gegenwart eines alkalischen Katalysators erhalten worden ist, mit b) einem Blockpolymerisat, das durch Umsetzung von Polypropylenglykolen mit Molgewichten von 1500 bis 2500 mit 30 bis 50 Gew.-% Ethylenoxid in Gegenwart alkalischer Katalysatoren hergestellt worden ist, im Verhältnis von 0,5 bis 4 mol von a) mit 1 mol b) nach vorheriger Neutralisation bei 80 bis 150 °C kondensiert und das sich bildende Reaktionswasser entfernt.

Sowohl die Stickstoff als auch die nicht Stickstoff enthaltenden bekannten Erdölspalter erfüllen die derzeitigen Forderungen jeweils nur zum Teil. Entweder ist bei spontaner Anfangsspaltung die Gesamtabscheidung zu schlecht und der Salzaustrag mäßig oder der Spaltvorgang verläuft bei zwar guter Salz- und Wasserabscheidung zu langsam. Mitunter ist auch ihre Verwendung an spezifische Ölsorten gebunden, oder es werden relativ große Einsatzmengen benötigt, oder sie sind nur bei erhöhter Temperatur wirksam.

Die Aufgabe der vorliegenden Erfindung besteht nun darin, neue Erdöl-Emulsionsspalter bereitzustellen, welche die obengenannten Mängel nicht aufweisen und insbesondere unabhängig von der Art und Zusammensetzung des Rohöls eine sehr kurze Separationszeit auch bei einer niedrigen Aufbereitungstemperatur, eine hohe Wirksamkeit auch bei einer geringen Einsatzmenge und korrosionshemmende Wirkung gegenüber metallischen Werkstoffen besitzen.

Es wurde überraschenderweise gefunden, daß Reaktionsprodukte aus a) einem Anlagerungsprodukt von Aldehyd an Phenol und b) einem ethoxylierten und propoxylierten Alkylendiamin oder Polyalkylenpolyamin Erdölspalter darstellen, welche die obengenannten wichtigen Eigenschaften hinsichtlich Separationszeit und Wirksamkeit in einem unerwartet hohen Ausmaß aufweisen und gleichzeitig auch eine relativ gute korrosionshemmende Wirkung besitzen.

Die erfindungsgemäßen Erdöl-Emulsionsspaltersind dadurch gekennzeichnet, daß sie hergestellt worden sind, indem man

a) ein Anlagerungsprodukt, das durch Umsetzung von Phenol mit Formaldehyd oder Acetaldehyd im molaren Verhältnis von 1 zu 1 bis 3 bei einer Temperatur von 50 bis 80°C in Gegenwart eines alkalischen Katalysators erhalten worden ist, mit

b) einem Stickstoff enthaltenden Blockpolymerisat, das durch Anlagerung von 10 bis 80 mol Ethylenoxid und Propylenoxid im statistischen Mittel pro Stickstoffatom, wobei das molare Verhältnis von Ethylenoxid zu Propylenoxid 1 zu 0,5 bis 14 beträgt, an Ethylendiamin, Propylendiamin, Diethylentriamin, Triethylentetramin, Tetraethylenpentamin und den entsprechenden Propylenaminen erhalten worden ist,

im Verhältnis von 1 bis 20 mol a) und 1 mol b) bei 90 bis 160 °C und einem pH-Wert von 6 bis 9 umsetzt.

Es wurde ferner gefunden, daß die Eigenschaften des erfindungsgemäßen Reaktionsproduktes noch verbessert werden, wenn es mit Propylenoxid umgesetzt wird.

Die Anlagerungsprodukte gemäß Komponente a) werden durch die an sich bekannte Addition von Formaldehyd oder Acetaldehyd an Phenol unter den genannten Bedingungen erhalten. Im Rahmen der vorliegenden Erfindung wird vorzugsweise Formaldehyd eingesetzt, zweckmäßigerweise in Form einer 35 gew.-%igen wäßrigen Formaldehyd-Lösung oder in Form von Paraformaldehyd. Das molare Verhältnis von Phenol zu Aldehyd beträgt vorzugsweise 1 zu 1,8 bis 2,2. Die Reaktionstemperatur von 50 bis 80 °C, vorzugsweise 55 bis 70 °C, in Kombination mit der alkalischen Katalyse gewährleistet, daß der Aldehyd an das Phenol addiert wird.

Als alkalische Katalysatoren sind beispielsweise Natriumhydroxid, Natriumalkoholate wie Natriummethylat, Natriumcarbonat, Calciumhydroxid und die entsprechenden Kaliumverbindungen sowie tertiäre Amine wie Triethylamin geeignet, wobei Natriumhydroxid, Kaliumhydroxid und Natriumalkoholate bevorzugt sind. Die Menge an alkalischem Katalysator beträgt im allgemeinen 0,5 bis 10 Gew.-%, vorzugsweise 1 bis 5 Gew.-%, bezogen auf die Menge an eingesetztem Phenol.

2

0 097 896

Die Anlagerungsprodukte a) sind in der zitierten deutschen Patentschrift 24 45 873 und in der zitierten US-Patentschrift 4 117 031 beschrieben. Sie stellen in der Regel braungefärbte, leicht viskose, klare, in Wasser gut lösliche Flüssigkeiten dar.

Die Stickstoff enthaltenden Blockpolymerisate gemäß Komponente b) werden durch die an sich bekannte Addition von Ethylenoxid und Propylenoxid (Oxalkylierung) an die genannten Alkylenamine erhalten. Dabei werden 10 bis 80 mol, vorzugsweise 30 bis 70 mol, Ethylenoxid und Propylenoxid im statistischen Mittel pro Stickstoffatom angelagert, wobei das Verhältnis von Ethylenoxid zu Propylenoxid 1 zu 0,5 bis 14, vorzugsweise 1 zu 1 bis 8, beträgt.

Als Alkylenamine kommen erfindungsgemäß Ethylendiamin, Propylendiamin, Diethylentriamin, Triethylentetramin, Tetraethylenpentamin, die entsprechenden Propylenamine, oder Mischungen davon in Betracht. Die Polyamine enthalten im allgemeinen 3 bis 200 Stickstoffatome, vorzugsweise 3 bis 100 Stickstoffatome pro Molekül.

Die Oxalkylierung der genannten Alkylenamine wird bei einer Temperatur von 80 bis 160, vorzugsweise von 110 bis 150 °C, in Gegenwart von alkalischen Katalysatoren durchgeführt, es stellt sich ein Druck von etwa 30 bis 600 kpa ein. Dabei kann das Ethylenoxid und Propylenoxid nacheinander eingesetzt werden, indem zuerst das Ethylenoxid und anschließend das Propylenoxid oder zuerst das Propylenoxid und dann das Ethylenoxid angelagert wird. Es kann auch eine Mischung der beiden Alkylenoxide eingesetzt werden. Der Einsatz der beiden Alkylenoxide nacheinander ist bevorzugt. Dabei wird vorzugsweise zuerst Propylenoxid und dann Ethylenoxid eingesetzt. Als alkalische Katalysatoren sind Natriumhydroxid, Natriumalkoholate wie Natriummethylat, Natriumcarbonat und die entsprechenden Kaliumverbindungen geeignet, wobei Natriumhydroxid und Kaliumhydroxid bevorzugt sind. Die Menge an Katalysator beträgt im allgemeinen 5 bis 40 Gew.-%, vorzugsweise 10 bis 30 Gew.-%, bezogen auf die Menge an eingesetztem Alkylenamin.

Die Oxalkylierung kann in einer einzigen Stufe oder in mehreren, vorzugsweise 3 Stufen durchgeführt werden, wobei die mehrstufige Arbeitsweise bevorzugt ist. Bei dieser Arbeitsweise wird im allgemeinen so vorgegangen, daß in der ersten Stufe das in einem mit Rührer versehenen Druckgefäß vorgelegte Alkylenamin bei einer Temperatur von 100 bis 150°C ohne die Anwesenheit von Katalysator mit einer solchen molaren Ethylenoxid- oder Propylenoxid-Menge umgesetzt wird, die den im Alkylenamin an Stickstoff gebundenen Wasserstoffatomen entspricht. Nach Zugabe von alkalischem Katalysator wird in einer zweiten Stufe bei einer Temperatur von 110 bis 150 °C das restliche Ethylenoxid oder Propylenoxid angelagert, je nachdem, mit welchem Alkylenoxid begonnen worden ist. Nachdem die angestrebte Menge eines der beiden Alkylenoxide addiert ist, wird in einer dritten Stufe das zweite Alkylenoxid ebenfalls bei einer Temperatur von 110 bis 150°C angelagert. Der Druck während der Umsetzungen in den drei Stufen beträgt im allgemeinen etwa 50 bis 600 kPa.

Die einstufige Arbeitsweise, mit der die beiden Alkylenoxide gleichzeitig angelagert werden, wird im allgemeinen so durchgeführt, daß das Alkylenamin mit einer Mischung von Ethylenoxid und Propylenoxid in den oben angegebenen Mengen in Gegenwart von alkalischem Katalysator und bei einer Temperatur von 110 bis 150°C umgesetzt wird.

Die stickstoffhaltigen Blockpolymerisate gemäß Komponente b) stellen bei Normalbedingungen in der Regel leicht viskose bis halbfeste, hellgelb gefärbte Produkte dar.

Die Herstellung der erfindungsgemäßen Erdölspalter erfolgt dadurch, daß man das Anlagerungsprodukt a) mit dem stickstoffhaltigen Blockpolymerisat b) im Verhältnis von 1 bis 20 mol, vorzugsweise 1 bis 16 mol, von a) zu 1 mol von b) bei 90 bis 160 °C, vorzugsweise 100 bis 150°C und einem pH-Wert von 6 bis 9, vorzugsweise 6,5 bis 8,5, kondensiert und das sich bildende Reaktionswasser entfernt (der pH-Wert der Mischung von a) und b) wird als 1 gew.-%ige wäßrige Lösung gemessen).

Da die Komponenten a) und b) in der Regel alkalisch sind, wird der angegebene pH-Wert durch Zugabe einer entsprechenden Menge einer Säure eingestellt. Es können anorganische oder organische Säuren verwendet werden. Geeignet sind beispielsweise Halogenwasserstoffsäuren wie Salzsäure und Bromwasserstoffsäure, Phosphorsäuren, Schwefelsäure, Carbonsäuren wie Essigsäure und Propionsäure, Sulfonsäuren wie Paratoluolsulfonsäure und Dodecylbenzolsulfonsäure, Halogenessigsäuren wie Trichloressigsäure und Trifluoressigsäure und Mischungen hiervon. Bevorzugt sind Phosphorsäure, Schwefelsäure, Para-Toluolsulfonsäure und Dodecylbenzolsulfonsäure oder Mischungen davon. Die Komponenten a) und b) können als solche oder in einem Lösungsmittel gelöst eingesetzt werden. Sie werden zweckmäßigerweise unter Rühren auf die angegebene Temperatur erhitzt und bei dieser Temperatur gehalten, wobei das Wasser kontinuierlich ausgetragen wird. Die Umsetzung (Kondensation) wird solange durchgeführt, bis kein oder nahezu kein Reaktionswasser mehr gebildet wird. Das ist im allgemeinen je nach Reaktionstemperatur und Größe des Vakuums, nach bis zu 15 Stunden der Fall. Das Wasser wird zweckmäßigerweise mit Hilfe von Vakuum oder durch Schlepp- oder azeotrope Destillation unter Verwendung eines organischen Lösungsmittels entfernt. Als organische Lösungsmittel kommen beispielsweise Toluol, Xylol, höhersiedende Aromaten oder Mischungen davon in Betracht. Das bevorzugte organische Lösungsmittel ist Xylol. Die Menge an Lösungsmittel kann in weiten Grenzen variieren.

Die Herstellung der erfindungsgemäßen Erdölspalter erfolgt im einzelnen vorzugsweise nach einer der beiden folgenden Arbeitsweisen:

Nach der einen Arbeitsweise werden die Komponenten a) und b) in einem Reaktionsgefäß vorgelegt, unter Rühren vermischt, auf den angegebenen pH-Wert eingestellt und unter Rühren auf 100 bis 130 °C erhitzt. Nun wird zur Austragung des Wassers Vakuum (Wasserstrahlvakuum) angelegt und solange unter Rühren bei

3

dieser Temperatur gehalten, bis kein oder keine nennenswerte Menge an Reaktionswasser mehr entsteht. Dies ist in der Regel nach 10 bis 15 Stunden der Fall. Nach der zweiten bevorzugten Arbeitsweise wird zunächst so wie bei der ersten vorgegangen und ebenfalls unter Rühren auf 100 bis 130 °C erhitzt. Nun wird zur Austragung des Wassers Vakuum (Wasserstrahlvakuum) angelegt und bei der Temperatur von 100 bis 130 °C 3 bis 8 Stunden lang gehalten. Das Reaktionsprodukt wird nun in einem der obengenannten organischen Lösungsmittel, vorzugsweise in Xylol, aufgenommen (zu einer etwa 30 bis 60 gew.-%igen Lösung) und 5 bis 10 Stunden lang bei einer Temperatur von 140 bis 150 °C gekocht unter Auskreisung des weiteren Reaktionswassers mit dem organischen Lösungsmittel.

Die erfindungsgemäße Umsetzung des Reaktionsproduktes (Kondensationsproduktes) der Komponenten a) und b) mit Propylenoxid (Oxpropylierung) kann in einer oder mehreren Stufen durchgeführt werden. Sie wird vorzugsweise einstufig durchgeführt. Diese Oxpropylierung (nachträgliche Oxpropylierung) erfolgt im Prinzip unter den gleichen Bedingungen wie die Oxethylierung und Oxpropylierung zur Herstellung der Komponente b).

Im allgemeinen wird so vorgegangen, daß in einem mit Rührer versehenen Druckgefäß das Kondensationsprodukt aus den Komponenten a) und b), zweckmäßigerweise in Form einer Lösung in Toluol, Xylol, höhersiedenden Aromaten oder Mischungen davon, beispielsweise in einer 50 gew.-%igen xylolischen Lösung, vorgelegt und (nach Spülen des Gasraumes mit Stickstoff) einer der obengenannten alkalischen Katalysatoren zugesetzt wird. Die Menge an Katalysator beträgt im allgemeinen 0,5 bis 3 Gew.-%, vorzugsweise 1 bis 2 Gew.-%, bezogen auf das Gewicht des eingesetzten Kondensationsproduktes. Es wird unter Rühren erhitzt und bei der sich einstellenden Rückflußtemperatur von etwa 140 bis 160°C das durch den Katalysator gegebenenfalls eingebrachte Wasser ausgekreist. Nun wird bei einer Temperatur von 100 bis 140 °C, vorzugsweise 110 bis 130 °C, Propylenoxid angelagert. Der Druck während der Oxpropylierung beträgt etwa 50 bis 600 kPa. Das Ende der Umsetzung ist am abgefallenen Druck erkennbar.

Die Menge an Propylenoxid zur erfindungsgemäßen Oxpropylierung des Reaktionsproduktes aus den Komponenten a) und b) beträgt im allgemeinen 10 bis 200 g, vorzugsweise 20 bis 100 g, pro 100 g eingesetztes Reaktionsprodukt.

Die erfindungsgemäßen Erdölspalter sind mehr oder weniger viskose, gelb- bis braungefärbte Flüssigkeiten, die in organischen Lösungsmitteln, beispielsweise in Xylol, löslich sind.

Die neuen Erdölspalter eignen sich besonders vorteilhaft zum Spalten von Erdölemulsionen des Wasser-in-Öl-Typs. In den Erdöl-Aufbereitungsanlagen werden die Wasser-in-Öl-Emulsionen je nach Viskosität auf 40 bis 70 °C erwärmt und unter Zugabe geeigneter Demulgatoren (Spalter) oder mit Hilfe einer kombinierten elektrisch-chemischen Arbeitsweise auf die Abnahmespezifikationen der Raffinerien gebracht. Wegen der bestehenden Forderung nach Energieeinsparung versucht man immer mehr, die derzeit üblichen Aufbereitungstemperaturen zu senken. Eine niedrige Aufbereitungstemperatur hat aber zur Folge, daß die bekannten Spaltertypen in einer relativ hohen Menge zudosiert werden müssen. Es ist nun eine Tatsache, daß die Wirksamkeit eines Demulgators in einer Emulsion an eine bestimmte Höchstmenge gebunden ist. Wenn diese Menge überschritten wird, das heißt, wenn zuviel an Demulgator angeboten wird, sinkt die Wirksamkeit (sogenanntes overtreatment), das heißt, es scheidet sich nur ein Teil oder gar keine Wasserphase mehr ab. Es hat sich auch herausgestellt, daß mit den bekannten Spaltertypen die Separierung des Lagerstättenwassers nicht schnell genug erfolgt und daher häufig ein noch zu großer Gehalt an Restwasser oder Restemulsion im Verpumpöl vorliegt. Die erfindungsgemäßen Erdölspalter weisen im Vergleich zu den bekannten eine unerwartet schnelle Wirkung auf, die bereits bei Temperaturen der frisch geförderten Emulsionen (20 bis 40°C) in einer solchen Geschwindigkeit abläuft, daß diese Emulsionen schon in den Einlaufleitungen der Aufbereitungsanlagen weitgehend gespalten sind. Als vorteilhaften Nebeneffekt bringen sie darüber hinaus eine deutliche Druckminderung in den Sammelleitungen mit sich. Sie wirken ferner korrosionshemmend, was einen weiteren wesentlichen Vorteil darstellt. Die neuen Spalter zeichnen sich also insbesondere dadurch aus, daß sie auch bei niedrigen Aufbereitungstemperaturen nach kurzer Separationszeit abnahmespezifische Roherdöle liefern, und daß dazu nur eine relativ geringe Menge erforderlich ist.

Die Einsatzmengen der erfindungsgemäßen Spalter können in weiten Grenzen variieren. Sie hängen insbesondere von der Art der Roherdöl-Emulsion, der Aufbereitungstemperatur und der Art der mechanisch/physikalischen Aufbereitungsanlage ab. Die wirksame Menge beträgt im allgemeinen 5 bis 100 g pro Tonne, vorzugsweise 10 bis 50 g pro Tonne. Die neuen Spalter werden zum Zweck der besseren Dosierung und Verteilbarkeit in der Roherdöl-Emulsion, vorzugsweise in Lösung eingesetzt. Als Lösungsmittel sind Wasser oder organische Lösemittel wie Alkohole, beispielsweise Methanol, Isopropanol und Butanol, aromatische Kohlenwasserstoffe, beispielsweise Toluol und Xylol, und handelsübliche Mischungen aus höheren Aromaten geeignet.

Die Erfindung wird nun an Beispielen noch näher erläutert.

**Herstellung der erfindungsgemäßen Erdölspalter**

4

## Beispiel 1

Phenol-Aldehyd-Additionsprodukt (Komponente a)

In einem Reaktionsgefäß werden 376 g (4 mol) Phenol und 12 g einer 50 gew.-%igen wäßrigen Natriumhydroxid-Lösung (das sind 1,6 Gew.-% Natriumhydroxid, bezogen auf Phenol) vorgelegt und unter Rühren auf 50 bis 55 °C erhitzt. Bei dieser Temperatur werden unter Rühren 686 g einer 35 gew.-%igen wäßrigen Formaldehydlösung (das sind 8 mol Formaldehyd) im Verlauf von etwa 1 Stunde zudosiert. Nach Beendigung der Formaldehydzugabe wird noch 6 Stunden lang bei 70° C nachgerührt, bis der Gehalt an freiem Formaldehyd kleiner als 3 Gew.-% ist.

Es liegt eine etwa 58 gew.-%ige wäßrige, braun gefärbte Lösung des Reaktionsproduktes (Dimethylolphenol-Lösung) vor. Sie stellt die Komponente a) dar.

Stickstoffhaltiges Blockpolymerisat (Komponente b)

In einem Reaktionsgefäß werden 120 g (2 mol) Ethylendiamin vorgelegt und unter Rühren auf 120 bis 130° C erhitzt. Bei dieser Temperatur werden unter Rühren und bei einem Druck von 100 bis 400 kpa 352 g (8 mol) Ethylenoxid zudosiert. Das Ende der Umsetzung (Ethylenoxid-Addition) wird dadurch erkannt, daß der Druck auf unter 100 kPa fällt. Nun werden 11 g Ätzkali (das sind 9,2 Gew.-%, bezogen auf Ethylendiamin) als Katalysator eingebracht. Nach Trocknung des Inhaltes des Reaktionsgefäßes bei einer Temperatur von etwa 90° C mit Hilfe eines Vakuums von etwa 2 kPa wird unter Rühren auf 130 bis 150 °C erhitzt, worauf bei dieser Temperatur und einem Druck von 100 bis 500 kPa weitere 2330 g (52,9 mol) Ethylenoxid zudosiert werden. Nach Beendigung der Ethylenoxid-Addition werden wiederum unter Rühren bei einer Temperatur von 120 bis 130° C und einem Druck von 50 bis 400 kPa 8200 g (141,4 mol) Propylenoxid zudosiert. Das Ende der Propylenoxidanlagerung wird dadurch erkannt, daß der Druck auf unter 40 kPa fällt. (Das molare Verhältnis von Ethylenoxid zu Propylenoxid beträgt 1: 2, 3; die Summe Epoxid entspricht im statistischen Mittel 50 mol pro Stickstoffatom.) Es liegt eine gelb gefärbte, klare und leicht viskose Flüssigkeit als Reaktionsprodukt vor. Es stellt die Komponente b) dar.

Erfindungsgemäßes Produkt

26,6 g (0,1 mol) von der Komponente a) und 130 g (0,025 mol von der Komponente b) werden in einem Reaktionsgefäß vorgelegt (das molare Verhältnis von a) zu b) ist 4:1), unter Rühren durch Zugabe von Phosphorsäure auf einen pH-Wert von 6,4 eingestellt und auf 120 °C erhitzt, worauf zur Austragung des Wassers Wasserstrahlvakuum (das ist etwa 2000 pa) angelegt und bei dieser Temperatur unter Rühren 4 Stunden lang gehalten wird. Nun wird zum Inhalt des Reaktionsgefäßes 140 g Xylol dazugegeben und bei 145° C 10 Stunden lang gekocht unter Auskreisen des weiteren Reaktionswassers mit dem Xylol.

Der erfindungsgemäße Erdölspalter liegt in Form einer etwa 50 gew.-%igen, braun gefärbten und mittelsviskosen xylolischen Lösung vor.

## Beispiel 2

53,2 g (0,2 mol) von der Komponente a) des Beispiels 1 und 130 g (0,025 mol) von der Komponente b) des Beispiels 1 werden wie in Beispiel 1 behandelt, mit dem Unterschied, daß anstelle von 140 g Xylol 155 g zugegeben werden (das molare Verhältnis von a) zu b) ist 8:1).

Der Erdölspalter gemäß diesem Beispiel liegt ebenfalls in Form einer etwa 50 gew.-%igen, rotbraun gefärbten und mittelviskosen xylolischen Lösung vor.

## Beispiel 3

Stickstoffhaltiges Blockpolymerisat (Komponente b)

In einem Reaktionsgefäß werden 60 g (1 mol) Ethylendiamin vorgelegt und unter Rühren auf 120 bis 130° C erhitzt. Bei dieser Temperatur werden unter Rühren und bei einem Druck von 50 bis 300 kPa 232 g (4 mol) Propylenoxid zudosiert. Das Ende der Umsetzung (Propylenoxid-Addition) wird dadurch erkannt, daß der Druck auf unter 50 kPa fällt. Nun werden 18 g Ätzkali (das sind 30 Gew.-%, bezogen auf Ethylendiamin) als Katalysator eingebracht. Nach Trocknung des Inhaltes des Reaktionsgefäßes bei einer Temperatur von etwa 90° C mit Hilfe eines Vakuums von etwa 2000 Pa wird unter Rühren auf 120 bis 130° C erhitzt, worauf bei dieser Temperatur und einem Druck von 50 bis 400 kPa weitere 4670 g (80,5 mol) Propylenoxid zudosiert werden. Nach Beendigung der Propylenoxid-Addition werden wiederum unter Rühren bei einer Temperatur von 120 bis 130° C und einem Druck von 100 bis 500 kPa 1240 g (28,2 mol) Ethylenoxid zudosiert. Das Ende der Ethylenoxid-Anlagerung wird dadurch erkannt, daß der Druck auf unter 50 kPa fällt. (Das molare Verhältnis von Ethylenoxid zu Propylenoxid beträgt 1:3; die Summe Epoxid entspricht im statistischen Mittel 57 mol pro Stickstoffatom.)

Es liegt eine gelb gefärbte, klare und leicht viskose Flüssigkeit als Reaktionsprodukt vor. Es stellt die Komponente b) dar.

Erfindungsgemäßes Produkt

53,2 g (0,2 mol) von der Komponente a) des Beispiels 1 und 155 g (0,025 mol) von der Komponente b) werden in einem Reaktionsgefäß vorgelegt (das molare Verhältnis von a) zu b) ist 8:1), unter Rühren durch Zugabe von Phosphorsäure auf einen pH-Wert von 6,0 eingestellt und auf 120°C erhitzt, worauf zur Austragung des Wassers Wasserstrahlvakuum angelegt und bei dieser Temperatur 4 Stunden lang gehalten wird. Nun wird zum Inhalt des Reaktionsgefäßes 180 g Xylol dazugegeben und bei 145°C 10 Stunden lang gekocht unter Auskreisen dcs weiteren Reaktionswassers mit dem Xylol.

Der erfindungsgemäße Erdölspalter liegt in Form einer etwa 50 gew.-%igen, braun gefärbten und mittelviskosen xylolischen Lösung vor.

## Beispiel 4

Komponente a) vom Beispiel 1
Komponente b) vom Beispiel 3, wobei jedoch anstelle der insgesamt 4902 g (84,5 mol) Propylenoxid, 4050 g (69,9 mol) Propylenoxid und anstelle der 1240 g (28,2 mol) Ethylenoxid, 726 g (16,5 mol) Ethylenoxid zudosiert werden. (Das molare Verhältnis Ethylenoxid zu Propylenoxid beträgt 1:4; die Summe Epoxid entspricht im statistischen Mittel 43 mol pro Stickstoffatom.)

53,2 g (0,2 mol) von der Komponente a) und 121 g (0,025 mol) von der Komponente b) werden in einem Reaktionsgefäß vorgelegt (das molare Verhältnis von a) zu b) ist 8:1), unter Rühren durch Zugabe von Phosphorsäure auf den pH-Wert von 6,0 eingestellt und auf 120°C erhitzt. Bei dieser Temperatur und Wasserstrahlvakuum zur Austragung des Wassers wird unter Rühren 11 Stunden lang gehalten.

Der Spalter gemäß diesem Beispiel stellt eine relativ viskose, rotbraun gefärbte Flüssigkeit dar.

## Beispiel 5

Komponente a) vom Beispiel 1
Komponente b) vom Beispiel 3, wobei jedoch anstelle der insgesamt 4902 g (84,5 mol) Propylenoxid, 5520 g (95,2 mol) Propylenoxid und anstelle der 1240 g (28,2 mol) Ethylenoxid, 616 g (14 mol) Ethylenoxid zudosiert werden. (Das molare Verhältnis Ethylenoxid zu Propylenoxid ist 1:7; die Summe Epoxid entspricht 55 mol pro Stickstoffatom.)

53,2 g (0,2 mol) von der Komponente a) und 155 g (0,025 mol) von der Komponente b) (das molare Verhältnis von a) zu b) ist 8:1) werden wie im Beispiel 4 behandelt mit dem Unterschied, daß mit der Phosphorsäure der pH-Wert 6,8 eingestellt wird und 10 Stunden lang bei 120°C und Wasserstrahlvakuum gehalten wird.

Der Spalter stellt eine relativ viskose, braun gefärbte Flüssigkeit dar.

## Beispiel 6

Komponente a) vom Beispiel 1
Komponente b) vom Beispiel 3, wobei jedoch anstelle der insgesamt 4902 g (84,5 mol) Propylenoxid, 4320 g (74,5 mol) Propylenoxid und anstelle der 1240 g (28,2 mol) Ethylenoxid, 490 g (11,1 mol) Ethylenoxid zudosiert werden (Molverhältnis Ethylenoxid zu Propylenoxid = 1:6,7; die Summe Epoxid entspricht 43 mol pro Stickstoffatom). 212 g (0,8 mol) von der Komponente a) und 490 g (0,1 mol) von der Komponente b) (das molare Verhältnis von a) zu b) ist 8:1) werden wie im Beispiel 4 behandelt mit dem Unterschied, daß mit 16 g Dodecylbenzolsulfonsäure der pH-Wert 8,2 eingestellt wird und 15 Stunden lang bei 100 °C und Wasserstrahlvakuum gehalten wird. Der erhaltene Spalter ist eine braun gefärbte, mittelviskose Flüssigkeit.

## Beispiel 7

Komponente a) vom Beispiel 1
Komponente b) vom Beispiel 3, wobei jedoch anstelle der insgesamt 4900 g (84,5 mol) Propylenoxid, 4340 g (74,8 mol) Propylenoxid und anstelle der 1240 g (28,2 mol) Ethylenoxid, 1150 g (26,1 mol) Ethylenoxid zudosiert werden. (Das molare Verhältnis von Ethylenoxid zu Propylenoxid beträgt 1: 2,9; die Summe Epoxid entspricht im statistischen Mittel 50 mol pro Stickstoffatom.) 212 g (0,8 mol) von der Komponente a) und 555 g (0,1 mol) von der Komponente b) werden in einem Reaktionsgefäß vorgelegt (das molare Verhältnis von a) zu b) ist 8:1), unter Rühren durch Zugabe von 16 g Dodecylbenzolsulfonsäure auf den pH-Wert von 8,1 eingestellt und auf 100°C erhitzt. Bei dieser Temperatur und Wasserstrahlvakuum zur Austragung des Wassers wird unter Rühren 6 Stunden lang gehalten. Nun werden zum Inhalt des Reaktionsgefäßes 690 g Xylol dazugegeben und bei 145°C 10 Stunden lang gekocht unter Auskreisung des weiteren Reaktionswassers mit dem Xylol.

Es liegt eine braunviolette, mittelviskose, etwa 50 gew.-%ige xylolische Lösung des Spalters vor.

**Beispiel 8**

Komponente a) vom Beispiel 1
Komponente b) vom Beispiel 7.
14,2 g (0,0536 mol) von der Komponente a) und 150 g (0,0268 mol) von der Komponente b) (das molare Verhältnis von a) zu b) ist 2: 1) werden wie im Beispiel 6 behandelt mit dem Unterschied, daß mit 2,8 g Dodecylbenzolsulfonsäure der pH-Wert 8,3 eingestellt wird.
Der erhaltene Spalter ist eine braun gefärbte, mittelviskose Flüssigkeit.

**Beispiel 9**

Komponente a) vom Beispiel 1
Komponente b) vom Beispiel 7
28,4 g (0,107 mol) von der Komponente a) und 150 g (0,0268 mol) von der Komponente b) (das molare Verhältnis von a) zu b) ist 4:1) werden wie in Beispiel 7 behandelt mit dem Unterschied, daß 3,4 g Dodecylbenzolsulfonsäure zur Einstellung des pH-Wertes von 8,1 zugesetzt werden, 12 Stunden lang 100°C und Wasserstrahlvakuum gehalten wird und anschließend zum Inhalt des Reaktionsgefäßes 162 g Xylol zugegeben werden.
Der erhaltene Spalter liegt in Form einer braun gefärbten mittelviskosen, etwa 50 gew.-%igen xylolischen Lösung vor.

**Beispiel 10**

Komponente a) vom Beispiel 1
Komponente b) vom Beispiel 7.
56,8 g (0,214 mol) von der Komponente a) und 100 g
(0,0178 mol) von der Komponente b) (das molare Verhältnis von a) zu b) ist 12: 1) werden wie in Beispiel 7 behandelt mit dem Unterschied, daß 3,7 g Dodecylbenzolsulfonsäure zur Einstellung des pH-Wertes von 8,1 zugesetzt werden, 3 Stunden lang bei 100°C und Wasserstrahlvakuum gehalten wird und anschließend zum Inhalt des Reaktionsgefäßes 130 g Xylol zugegeben werden.
Der erhaltene Spalter liegt in Form einer violett gefärbten, mittelviskosen, etwa 50 gew.-%igen xylolischen Lösung vor.

**Beispiel 11**

Stickstoffhaltiges Blockpolymerisat (Komponente b)
In einem Reaktionsgefäß werden 94,5 g (0,50 mol) Tetraethylenpentamin vorgelegt und unter Rühren bei 120 bis 130°C und einem Druck von 1 bis 3 bar werden 215 g (3,7 mol) Propylenoxid zudosiert. Nachdem der Druck auf unter 50 kPa abgefallen ist, werden 14 g Ätzkali (das sind 15 Gew.-%, bezogen auf Polyamin) als Katalysator eingebracht. Nach Trocknen des Reaktionsgemisches bei 100°C mit Hilfe eines Vakuums von etwa 2000 Pa wird unter Rühren auf 120 bis 130°C erhitzt. Bei dieser Temperatur und einem Druck von 50 bis 400 kPa werden weitere 4190 g (72,2 mol) Propylenoxid zudosiert. Nach Beendigung der Propylenoxid-Addition wird bei einer Temperatur von 130 bis 150°C und einem Druck von 100 bis 400 kPa 700 g (15,9 mol) Ethylenoxid zudosiert. (Das Molverhältnis von Ethylenoxid zu Propylenoxid beträgt 1:4,8; im statistischen Mittel sind 37 mol Epoxid pro Stickstoffatom angelagert.)
Nach Abreagieren des Ethylenoxids liegt eine gelbe, leicht viskose Flüssigkeit vor.

**Erfindungsgemäßes Produkt**

10,6 g (0,04 mol) von der Komponente a) des Beispiels 1 und 208 g (0,02 mol) der Komponente b) werden in einem Reaktionsgefäß vorgelegt (molares Verhältnis a) zu b) ist 2:1), unter Rühren durch Zugabe von 2,7 g Dodecylbenzolsulfonsäure auf einen pH-Wert von 8,1 eingestellt und auf 100 °C aufgeheizt. Bei dieser Temperatur und Wasserstrahlvakuum wird unter Rühren 10 Stunden lang gehalten. Nun werden 214 g Xylol zugesetzt und der Inhalt des Reaktionsgefäßes 8 Stunden lang gekocht unter Auskreisen des weiteren Reaktionswassers mit dem Xylol.
Es liegt eine violett gefärbte, mittelviskose, etwa 50 gew.-%ige xylolische Lösung des Kondensationsprodukts vor.

**Beispiel 12**

Komponente a) von Beispiel 1
Komponente b) von Beispiel 11
31,8 g (0,12 mol) von Komponente a) und 156 g (0,015 mol) von der Komponente b) (das molare Verhältnis von a) zu b) ist 8:1) werden wie im Beispiel 11 behandelt mit dem Unterschied, daß 3 g Dodecylbenzolsulfonsäure zurEinstellung des pH-Wertes gebraucht werden.
Der erhaltene Spalter ist eine violett gefärbte, mittelviskose Flüssigkeit in 50 gew.-%iger xylolischer Lösung.

**Beispiel 13**

Komponente a) von Beispiel 1
Komponente b) von Beispiel 11
63,6 g der Komponente a) (0,24 mol) und 156 g (0,015 mol) von der Komponente b) (molares Verhältnis a) zu b) ist 16:1) werden wie im Beispiel 11 behandelt mit dem Unterschied, daß 4,2 g Dodecylbenzolsulfonsäure zur Einstellung des pH-Wertes von 8,3 gebraucht werden.
Der erhaltene Spalter liegt in Form einer violett gefärbten mittelviskosen, etwa 50 gew.-%igen xylolischen Lösung vor.

**Beispiel 14**

Komponente a) vom Beispiel 1
Komponente b) vom Beispiel 11, wobei bei gleicher Menge Propylenoxid von insgesamt 4405 g (75,9 mol) anstelle der 700 g (15,9 mol) Ethylenoxid, 4400 g (100 mol) Ethylenoxid zudosiert werden. (Das Molverhältnis von Ethylenoxid zu Propylenoxid beträgt 1: 0,76; im statistischen Mittel sind 70 mol Epoxid pro Stickstoffatom angelagert). 21,2 g (0,08 mol) von der Komponente a) und 180 g (0,01 mol) von der Komponente b) werden in einem Reaktionsgefäß vorgelegt (molares Verhältnis a) zu b) ist 8:1) und unter Rühren durch Zugabe von 1,9 g Dodecylbenzolsulfonsäure auf einen pH-Wert von 7,8 eingestellt und auf 100 °C erhitzt. Bei dieser Temperatur wird 6 Stunden unter Wasserstrahlvakuum gerührt, anschließend zum Reaktionsgemisch 190 g Xylol zugegeben und 12 Stunden gekocht unter Auskreisen weiterer Reaktionswassers mit Xylol.
Man erhält eine braun gefärbte, viskose, etwa 50 gew.-%ige xylolische Lösung des Kondensationsprodukts.

**Beispiel 15**

Stickstoffhaltiges Blockpolymerisat (Komponente b)
In einem Reaktionsgefäß werden 65,5 g (0,50 mol) Dipropylentriamin vorgelegt und unter Rühren bei 120 bis 130 °C 145 g (2,5 mol) Propylenoxid zudosiert. Nach Abreagieren des Propylenoxids werden 14 g Ätzkali (das sind 21 Gew.-%, bezogen auf Polyamin) als Katalysator eingebracht und weiter behandelt wie bei Beispiel 11 mit dem Unterschied, daß noch weitere 3300 g (56,9 mol) Propylenoxid und 870 g (19,8 mol) Ethylenoxid zudosiert werden. (Das Molverhältnis von Ethylenoxid zu Propylenoxid beträgt 1:3,0; im statistischen Mittel sind 53 mol Epoxid pro Stickstoffatom angelagert.)

**Erfindungsgemäßes Produkt**

42,4 g (0,16 mol) von der Komponente a) des Beispiels 1 und 175 g (0,02 mol) der Komponente b) (molares Verhältnis a) zu b) ist 8: 1) werden wie im Beispiel 11 behandelt mit dem Unterschied, daß mit 4 g Dodecylbenzolsulfonsäure der pH-Wert 8,5 eingestellt wird und anstelle von 214 g Xylol 195 g Xylol zugesetzt werden. Der erhaltene Spalter liegt in Form einer violett gefärbten, mittelviskosen, 50 gew.-%igen xylolischen Lösung vor.

**Beispiel 16**

(nachträgliche Oxpropylierung)
Zu 500 g der 50 gew.-%igen xylolischen Lösung des Kondensationsproduktes von Beispiel 7 werden 2,5 g Ätzkali gegeben, worauf bei der Rückflußtemperatur von etwa 145°C etwa 1 Stunde lang zum Austrag von Wasser gerührt wird. In dem Autoklaven werden anschließend, nach sorgfältiger Spülung des Reaktionsraumes mit Stickstoff, bei 120 bis 130°C und einem Druck von 50 bis 300 kPa 63 g Propylenoxid (das sind 25 Gew.-% Propylenoxid, bezogen auf eingesetztes Kondensationsprodukt, oder 25 g Propylenoxid pro 100 g Kondensationsprodukt) zudosiert. Nach Abreaktion des Propylenoxids durch Nachrühren bei 120 bis 130°C erhält man eine violett gefärbte, homogene, etwa 55 gew.-%ige xylolische Lösung als Endprodukt.

**Beispiel 17**

(nachträgliche Oxpropylierung)
500 g des Kondensationsprodukts von Beispiel 7 werden wie in Beispiel 16 behandelt mit dem Unterschied, daß anstelle von 63 g Propylenoxid 166 g Propylenoxid (66 Gew.-% Propylenoxid, bezogen auf eingesetztes Kondensationsprodukt) zudosiert werden. Man erhält das Endprodukt als 62 gew.-%ige xylolische Lösung.

**Beispiel 18**

(nachträgliche Oxpropylierung)
Zu 300 g der 50 gew.-%igen xylolischen Lösung des Kondensationsprodukts vom Beispiel 12 werden 1,8 g Ätzkali gegeben. Es wird weiter wie in Beispiel 16 vorgegangen, mit dem Unterschied, daß 135 g Propylenoxid (das sind 90 Gew.-% Propylenoxid, bezogen auf eingesetztes Kondensationsprodukt) zudosiert werden.
Man erhält eine braunviolett gefärbte, homogene, etwa 65 gew.-%ige xylolische Lösung als Endprodukt.

**Verwendung der erfindungsgemäßen Verbindungen als Erdölspalter**

Die folgenden Beispiele mit mehreren verschiedenen Rohölemulsionen zeigen, daß die neuen Erdölspalter, verglichen mit denen gemäß Stand der Technik, in einer von der Roherdölart weitgehend unabhängigen und jeweils relativ geringen Menge auch bei einer niedrigen Aufbereitungstemperatur eine unerwartet hohe Wirksamkeit besitzen.
Die in den Beispielen angegebenen Prozente sind Gewichtsprozente.

**Beispiele 19 bis 20**

Rohölemulsion aus dem süddeutschen Raum
Wassergehalt: 51.50 %
Salinität: 0.76 %
Spalttemperatur: 30° C

| Spaltertyp | Einsatz-menge ppm | Wasserseparation in % nach | | | | | | | % Restwasser im Topöl |
|---|---|---|---|---|---|---|---|---|---|
| | | 10' | 20' | 30' | 1ʰ | 3ʰ | 6ʰ | 24ʰ | |
| (1) Vernetzter Spalter nach DE-PS 24 45 837 | 100 | 0 | 0 | 0 | 10 | 58 | 86 | 92 | 0,9 |
| (2) Spalter von Biespiel 1 vorliegender Anmeldung | 100 | 0 | 2 | 4 | 25 | 62 | 90 | 96 | 0,5 |
| (3) Spalter von Biespiel 2 vorliegender Ammeldung | 100 | 0 | 8 | 12 | 36 | 70 | 92 | 98 | 0,4 |
| Blindwert | — | 0 | 0 | 0 | 0 | 0 | 0 | 2 | — |
| Spalttemperatur: 50° C | | | | | | | | | |
| (1) | 30 | 8 | 54 | 66 | 72 | 86 | 94 | 96 | 0,5 |
| (2) | 30 | 18 | 60 | 74 | 78 | 92 | 94 | 98 | 0,2 |
| (3) | 30 | 20 | 62 | 76 | 80 | 92 | 96 | 98 | 0,2 |
| Blindwert | — | 0 | 0 | 0 | 0 | 2 | 2 | 4 | — |

**Beispiele 21 bis 23**

Testemulsion = Rohöl aus dem Voralpengebiet, das auf einen Wassergehalt von 50 % und eine Salinität von 0.50 % eingestellt wurde.
Spalttemperatur: 50° C

| Spaltertyp | Einsatz-menge ppm | Wasserseparation in % nach | | | | | |
|---|---|---|---|---|---|---|---|
| | | 10′ | 20′ | 30′ | 1ʰ | 3ʰ | 6ʰ |
| Vernetzter Spalter nach DE-PS 24 45 837 | 20 | 4 | 12 | 40 | 58 | 68 | 90 |
| Komponenete a) von Beispiel 4 vorl. Anmeldung | 20 | 0 | 0 | 0 | 0 | 2 | 4 |
| Komponente b) von Beispiel 4 vorl. Anmeldung | 20 | 0 | 1 | 8 | 12 | 24 | 32 |
| Spalter von Beispeil 4 vorliegender Anmeldung | 20 | 12 | 34 | 60 | 84 | 90 | 90 |
| Komponente a) von Beispiel 3 vorl. Anmeldung | 20 | 0 | 0 | 0 | 1 | 2 | 4 |
| Komponente b) von Beispiel 3 vorl. Anmeldung | 20 | 0 | 4 | 18 | 26 | 31 | 38 |
| Spalter von Beispeil 3 vorliegender Anmeldung | 20 | 16 | 48 | 80 | 90 | 96 | 98 |
| Komponente a) von Beispiel 5 vorl. Anmeldung | 20 | 0 | 0 | 0 | 0 | 1 | 2 |
| Komponente b) von Beispiel 5 vorl. Anmeldung | 20 | 0 | 4 | 16 | 24 | 30 | 36 |
| Spalter von Beispiel 5 vorliegender Anmeldung | 20 | 14 | 46 | 66 | 86 | 88 | 90 |
| Blindwert | — | 0 | 0 | 0 | 0 | 0 | 0 |

**Beispiele 24 bis 26**

Rohölemulsion aus Niedersachsen
Wassergehalt: 43 %
Salinität: 10.2 %
Spalttemperatur: 30° C

| Spaltertyp | Einsatz-menge ppm | Wasserseparation in % nach | | | | | | | % Restwasser im Topöl |
|---|---|---|---|---|---|---|---|---|---|
| | | 10' | 20' | 30' | 1$^h$ | 3$^h$ | 6$^h$ | 24$^h$ | |
| (1) Vernetzter Spalter nach DE-PS 24 45 837 | 100 | 0 | 8 | 24 | 48 | 70 | 76 | 86 | 1,6 |
| (2) Spalter von Biespiel 4 vorliegender Anmeldung | 100 | 2 | 16 | 30 | 54 | 82 | 84 | 94 | 0,5 |
| (3) Spalter von Biespiel 3 vorliegender Anmeldung | 100 | 2 | 14 | 34 | 62 | 82 | 86 | 96 | 0,4 |
| (4) Spalter von Biespiel 5 vorliegender Anmeldung | 100 | 0 | 8 | 28 | 52 | 76 | 82 | 90 | 0,8 |
| Blindwert | — | 0 | 0 | 0 | 0 | 2 | 2 | 3 | — |
| Spalttemperatur: 50° C | | | | | | | | | |
| (1) | 20 | 24 | 38 | 68 | 70 | 80 | 84 | 90 | 0,9 |
| (2) | 20 | 44 | 60 | 72 | 76 | 84 | 86 | 96 | 0,4 |
| (3) | 20 | 46 | 60 | 76 | 80 | 86 | 88 | 98 | 0,2 |
| (4) | 20 | 40 | 56 | 70 | 76 | 82 | 86 | 94 | 0,5 |
| Blindwert | — | 0 | 0 | 0 | 2 | 2 | 3 | 6 | — |

**Beispiele 27 bis 29**

Rohölemulsion aus Saudi-Arabien
Wassergehalt: 20,6 %
Salinität: 6,8 %
Spalttemperatur 30° C

| Spaltertyp | Einsatz-menge ppm | Wasserseparation in % nach | | | | | | | % Restwasser im Topöl |
|---|---|---|---|---|---|---|---|---|---|
| | | 10' | 20' | 30' | 1$^h$ | 3$^h$ | 6$^h$ | 24$^h$ | |
| (1) Vernetzter Spalter nach DE-PS 24 45 837 | 100 | 0 | 0 | 2 | 4 | 28 | 80 | 86 | 2,0 |
| (2) Spalter von Biespiel 8 vorliegender Anmeldung | 100 | 0 | 1 | 4 | 8 | 36 | 92 | 96 | 0,4 |
| (3) Spalter von Biespiel 9 vorliegender Anmeldung | 100 | 0 | 1 | 8 | 12 | 80 | 92 | 96 | 0,3 |
| (4) Spalter von Biespiel 10 vorliegender Anmeldung | 100 | 0 | 2 | 4 | 10 | 84 | 92 | 96 | 0,4 |
| Blindwert | — | 0 | 0 | 0 | 0 | 0 | 0 | 2 | — |
| Spalttemperatur: 50° C | | | | | | | | | |
| (1) | 20 | 2 | 4 | 10 | 16 | 48 | 66 | 86 | 2,0 |
| (2) | 20 | 0 | 0 | 1 | 8 | 60 | 80 | 92 | 0,6 |
| (3) | 20 | 6 | 60 | 72 | 90 | 96 | 98 | 98 | 0,2 |
| (4) | 20 | 0 | 0 | 1 | 86 | 96 | 98 | 98 | 0,2 |
| Blindwert | — | 0 | 0 | 0 | 0 | 1 | 2 | 3 | — |

**Beispiele 30 bis 32**

Testemulsion = Rohöl aus dem Voralpengebiet, das auf einen
Wassergehalt von 50 % und eine Salinität von 0,5 eingestellt wurde.
Spalttemperatur: 30°C

| Spaltertyp | Einsatz-menge ppm | Wasserseparation in % nach | | | | | | | % Restwasser im Topöl |
|---|---|---|---|---|---|---|---|---|---|
| | | 10' | 20' | 30' | 1$^h$ | 3$^h$ | 6$^h$ | 24$^h$ | |
| (1) Spalter von Beispiel 11 vorliegender Anmeldung | 50 | 0 | 0 | 8 | 10 | 14 | 70 | 92 | 0,9 |
| (2) Komponenten a) + b) gemischt von Beispiel 11 vorliegender Anmeldung | 50 | 0 | 0 | 0 | 2 | 8 | 14 | 20 | — |
| (3) Spalter von Beispiel 12 vorliegender Anmeldung | 50 | 0 | 2 | 8 | 12 | 16 | 76 | 94 | 0,6 |
| (4) Komponenten a) + b) gemischt von Beispiel 13 vorliegender Anmeldung | 50 | 0 | 0 | 0 | 4 | 8 | 12 | 18 | — |
| (5) Spalter von Beispiel 12 vorliegender Anmeldung | 50 | 0 | 4 | 12 | 16 | 20 | 80 | 98 | 0,4 |
| (6) Komponenten a) + b) gemischt von Beispiel 14 vorliegender Anmeldung | 50 | 0 | 0 | 0 | 4 | 10 | 14 | 18 | — |
| Blindwert | — | 0 | 0 | 0 | 0 | 0 | 0 | 0 | — |
| Spalttemperatur: 50°C | | | | | | | | | |
| (1) | 20 | 32 | 38 | 54 | 70 | 82 | 100 | 100 | 0,1 |
| (2) | 20 | 0 | 0 | 2 | 8 | 14 | 20 | 26 | — |
| (3) | 20 | 40 | 44 | 48 | 74 | 90 | 100 | 100 | 0,1 |
| (4) | 20 | 0 | 0 | 2 | 10 | 16 | 20 | 28 | — |
| (5) | 20 | 46 | 50 | 64 | 76 | 96 | 100 | 100 | 0,1 |
| (6) | 20 | 0 | 0 | 0 | 8 | 14 | 18 | 26 | — |
| Blindwert | — | 0 | 0 | 0 | 0 | 0 | 0 | 2 | — |

**Beispiele 33 bis 36**

Rohölemulsion aus dem Weser-Ems-Gebiet
Wassergehalt: 58 %
Salinität: 3,4 %
Spalttemperatur 30°C

| Spaltertyp | Einsatz-menge ppm | Wasserseparation in % nach | | | | | | | % Restwasser im Topöl |
|---|---|---|---|---|---|---|---|---|---|
| | | 10' | 20' | 30' | 1h | 3h | 6h | 24h | |
| (1) Vernetzter Spalter nach DE-PS 24 45 837 | 100 | 0 | 2 | 6 | 46 | 62 | 74 | 88 | 1,8 |
| (2) Spalter von Beispiel 12 vorliegender Anmeldung | 100 | 4 | 12 | 22 | 44 | 68 | 84 | 94 | 0,6 |
| (3) Spalter von Beispiel 14 vorliegender Anmeldung | 100 | 2 | 10 | 18 | 44 | 66 | 84 | 92 | 0,8 |
| (4) Spalter von Beispiel 16 vorliegender Anmeldung | 100 | 0 | 12 | 34 | 76 | 98 | 98 | 100 | 0,1 |
| (5) Spalter von Beispiel 17 vorliegender Anmeldung | 100 | 0 | 1 | 10 | 28 | 92 | 96 | 98 | 0,3 |
| Blindwert | — | 0 | 0 | 0 | 0 | 0 | 0 | 0 | — |
| Spalttemperatur: 50°C | | | | | | | | | |
| (1) | 20 | 18 | 28 | 38 | 68 | 76 | 88 | 90 | 0,9 |
| (2) | 20 | 16 | 36 | 54 | 78 | 84 | 90 | 94 | 0,6 |
| (3) | 20 | 12 | 32 | 50 | 74 | 82 | 90 | 92 | 0,8 |
| (4) | 20 | 10 | 28 | 74 | 90 | 96 | 98 | 100 | 0,1 |
| (5) | 20 | 6 | 20 | 42 | 94 | 98 | 100 | 100 | 0,1 |
| Blindwert | — | 0 | 0 | 0 | 0 | 2 | 2 | 4 | — |

**Patentansprüche**

1. Erdöl-Emulsionsspalter, dadurch gekennzeichnet, daß sie hergestellt worden sind, indem man
a) ein Anlagerungsprodukt, das durch Umsetzung von Phenol mit Formaldehyd oder Acetaldehyd im molaren Verhältnis von 1:1 bis 3 bei einer Temperatur von 50 bis 80°C in Gegenwart eines alkalischen Katalysators erhalten worden ist, mit
b) einem Stickstoff enthaltenden Blockpolymerisat, das durch Anlagerung von 10 bis 80 mol Ethylenoxid und Propylenoxid im statistischen Mittel pro Stickstoffatom, wobei das molare Verhältnis von Ethylenoxid zu Propylenoxid 1:0,5 bis 14 beträgt, an Polyamine ausgewählt aus der Gruppe bestehend aus Ethylendiamin, Propylendiamin, Diethylentriamin, Triethylentetramin, Tetraethylenpentamin und den entsprechenden Propylenaminen erhalten worden ist,
im Verhältnis von 1 bis 20 mol a) zu 1 mol b) bei 90 bis 160°C und einem pH-Wert von 6 bis 9 umsetzt.
2. Erdöl-Emulsionsspalter nach Anspruch 1, dadurch gekennzeichnet, daß Komponente b) durch Anlagerung von 30 bis 70 mol Ethylenoxid und Propylenoxid im statistischen Mittel pro Stickstoffatom, wobei das molare Verhältnis von Ethylenoxid zu Propylenoxid 1 zu 0,5 bis 14 beträgt, erhalten worden ist.
3. Erdöl-Emulsionsspalter nach Anspruch 1, dadurch gekennzeichnet, daß das molare Verhältnis von Ethylenoxid zu Propylenoxid 1 zu 1 bis 8 beträgt.
4. Erdöl-Emulsionsspalter nach Anspruch 1, dadurch gekennzeichnet, daß die Komponenten a) und b) im Verhältnis von 1 bis 16 mol von a) zu 1 mol von b) umgesetzt werden.
5. Erdöl-Emulsionsspalter nach Anspruch 1, dadurch gekennzeichnet, daß die Komponenten a) und b) bei einer Temperatur von 100 bis 150 °C umgesetzt werden.
6. Erdöl-Emulsionsspalter nach Anspruch 1, dadurch gekennzeichnet, daß die Komponenten a) und b) bei einem pH-Wert von 6,5 bis 8,5 umgesetzt werden.
7. Erdöl-Emulsionsspalter nach Anspruch 1, dadurch gekennzeichnet, daß sie hergestellt worden sind, indem man
a) ein Anlagerungsprodukt, das durch Umsetzung von Phenol mit Formaldehyd oder Acetaldehyd im molaren Verhältnis von 1 zu 1,8 bis 2,2 bei einer Temperatur von 55 bis 70 °C in Gegenwart eines alkalischen Katalysators erhalten worden ist, mit
b) einem Stickstoff enthaltenden Blockpolymerisat, das durch Anlagerung von 30 bis 70 mol Ethylenoxid und Propylenoxid im statistischen Mittel pro Stickstoffatom, wobei das molare Verhältnis von Ethylenoxid zu Propylenoxid 1 zu 1 bis 8 beträgt, an Ethylendiamin, Propylendiamin, Diethylentriamin, Triethylentetramin, Tetraethylenpentamin und die entsprechenden Propylenamine, erhalten worden ist,
im Verhältnis von 1 bis 16 mol von a) zu 1 mol b) bei 100 bis 150 °C und einem pH-Wert von 6,5 bis 8,5 umsetzt.
8. Erdöl-Emulsionsspalter nach Anspruch 1, dadurch gekennzeichnet, daß das nach den Schritten a) und b) erhaltene Kondensationsprodukt mit 10 bis 200 g Propylenoxid pro 100 g Kondensationsprodukt, oxpropyliert wird.
9. Verfahren zum Trennen von Erdöl-Emulsionen, dadurch gekennzeichnet, daß den Emulsionen Spalter nach einem der Ansprüche 1 bis 8 in einer Menge von 5 bis 100 g pro Tonne zugesetzt werden.

**Claims**

1. A petroleum emulsion breaker which has been prepared by reacting, at 90 to 160 °C and at a pH value of 6 to 9,
a) an addition product which has been obtained by reacting phenol with formaldehyde or acetaldehvde in a molar ratio of 1:1 to 3 at a temperature of 50 to 80°C, in the presence of an alkaline catalyst, with
b) a block polymer which contains nitrogen and which has been obtained by an addition reaction in which 10 to 80 moles of ethylene oxide and propylene oxide are added on, as a statistical average per nitrogen atom, the molar ratio of ethylene oxide to propylene oxide being 1:0.5 to 14, to polyamines selected from the group consisting of ethylenediamine, propylenediamine, diethylenetriamine, triethylenetetramine, tetraethylenepentamine, and the corresponding propyleneamines, the ratio being 1 to 20 moles of a) to 1 mole of b).
2. A petroleum emulsion breaker as claimed in claim 1 wherein the component b) has been obtained by an addition reaction in which 30 to 70 moles of ethvlene oxide and propylene oxide are added on, as a statistical average per nitrogen atom, the molar ratio of ethylene oxide to propylene oxide being 1:0,5 to 14.
3. A petroleum emulsion breaker as claimed in claim 1 wherein the molar ratio of ethylene oxide to propylene oxide is 1:1 to 8.
4. A petroleum emulsion breaker as claimed in claim 1 wherein the components a) and b) are reacted in a ratio of 1 to 16 moles of a) to 1 mole of b).
5. A petroleum emulsion breaker as claimed in claim 1 wherein the components a) and b) are reacted at a temperature of 100 to 150°C.
6. A petroleum emulsion breaker as claimed in claim 1, wherein the components a) and b) are reacted at a pH value of 6.5 to 8.5.

**0 097 896**

7. A petroleum emulsion breaker as claimed in claim 1 which has been prepared by reacting, at 100 to 150 °C and at a pH value of 6.5 to 8.5,

a) an addition product which has been obtained by reacting phenol with formaldehyde or acetaldehyde in a molarratio of 1:1.8 to 2.2 at a temperature of 55 to 70°C, in the presence of an alkaline catalyst, with

b) a block polymer which contains nitrogen and which has been obtained by an addition reaction in which 30 to 70 moles of ethylene oxide and propylene oxide are added on, as a statistical average per nitrogen atom, the molar ratio of ethylene oxide to propylene oxide being 1:1 to 8, to ethylenediamine, propylenediamine, diethylentriamine, triethylenetetramine, tetraethylenepentamine and the corresponding propyleneamines, the ratio being 1 to 16 moles of a) to 1 mole of b).

8. A petroleum emulsion breaker as claimed in claim 1 wherein the condensation product obtained in accordance with stages a) and b) is oxpropylated with 10 to 200 g of propylene oxide per 100 g of condensation product.

9. A process for separating petroleum emulsions which comprises adding to the emulsions, in an amount of 5 to 100 g per tonne, breakers according to one of claims 1 to 8.

**Revendications**

1. Désémulsionnants du pétrole, caractérisés en ce qu'ils ont été préparés en faisant réagir:

a) un produit d'addition qui a été obtenu par réaction du phénol avec du formaldéhyde ou de l'acétaldéhyde dans un rapport molaire de 1: 1 à 3 à une température de 50 à 80°C, en présence d'un catalyseur alcalin, avec

b) un copolymére séquencé contenant de l'azote, qui a été obtenu par addition de 10 à 80 moles à'oxyde d'éthylène et d'oxyde de propylène, en moyenne statistique, par atome d'azote, le rapport molaire de l'oxyde d'éthylène à l'oxyde de propylène étant de 1: 0,5 à 14, sur une polyamine prise dans le groupeconstitué par l'éthylène-diamine, la propylène-diamine, la diéthylène-trianine, la triéthylène-tétramine, la tétraéthylène-pentamine et les propylène-amines correspondantes,

dans un rapport de 1 à 20 moles de a) pour 1 mole de b), à une température de 90 à 160°C et un pH de 6 à 9.

2. Désémulsionnants du pétrole selon la revendication 1, caractérisés en ce que le composant a) a été obtenu par addition de 30 à 70 moles d'oxyde d'éthylène et d'oxyde de propylène, en moyenne statistique, par atome d'azote, le rapport molaire de l'oxyde d'éthylène à l'oxyde de propylène étant de 1 pour 0,5 à 14.

3. Désémulsionnants du pétrole selon la revendication 1, caractérisés en ce que le rapport molaire de l'oxyde d'éthylène à l'oxyde de propylène est de 1 pour 1 à 8.

4. Désémulsionnants du pétrole selon la revendication 1, caractérisés en ce que l'on fait réagir les composants a) et b) dans un rapport de 1 à 16 moles de a) pour 1 mole de b).

5. Désémulsionnants du pétrole selon la revendication 1, caractérisés en ce que l'on fait réagir les composants a) et b) à une température de 100 à 150°C.

6. Désémulsionnants du pétrole salon la revendication 1, caractérisés en ce que l'on fait réagir les composants a) et b) à un pH de 6,5 à 8,5.

7. Désémulsionnants du pétrole selon la revendication 1, caractérisés en ce qu'ils ont été préparés en faisant réagir:

a) un produit d'addition qui a été obtenu par réaction du phénol avec du formaldéhyde ou de l'acétaldéhyde dans

un rapport molaire de 1: 1,8 à 2,2 à une température de 55 à 70°C, en présence à'un catalyseur alcalin, avec

b) un copolymère séquencé contenant de l'azote, qui a été obtenu par addition de 30 à 70 moles à'oxyde d'éthylène et d'oxyde de propylène, en moyenne statistique, par atome d'azote, le rapport molaire de l'oxyde à'éthylène à l'oxyde de propylène étant de 1: 1 à 8, sur une polyamine prise dans le groupe constitué par l'éthylène-diamine, la propylènediamine, la diéthylène-triamine, la triéthylène-tétranine, la tétraéthylène-pentamine et les propylène-amines correspondantes,

dans un rapport de 1 à 16 moles de a) pour 1 mole de b), à une température de 100 à 150°C et un pH de 6,5 à 8,5.

8. Désémlsionnants du pétrole selon la revendication 1, caractérisés en ce que le produit de condensation obtenu dans les étapes a) et b) est oxypropylé avec 10 à 200 g d'oxyde de propylène pour 100 g de produit de condensation.

9. Procédé de rupture d'émulsions de pétrole, caractérisé en ce que de désémulsionnants selon l'une quelconque des revendications 1 à 8 sont ajoutés aux émulsions en une proportion de 5 à 100 g par tonne.

16